# EUROPÄISCHE PATENTANMELDUNG

(11) **EP 1 724 042 A2**
(43) Veröffentlichungstag der Anmeldung: **22.11.2006**
(21) Anmeldenummer: 06113883.0
(22) Anmeldetag: 12.05.2006
(51) Int. Cl.: B23D 3/02

(54) **Nutstoßverfahren und Nutstoßmaschine**

(30) Priorität: 21.05.2005 DE 102005023527
(71) Anmelder: Balzat, Ernst, 53474 Bad Neuenahr-Ahrweiler (DE)
(72) Erfinder: Balzat, Ernst, 53474, Bad Neuenahr (DE); Balzat, Edmund, 50170, Kerpen (DE); Ergert, Karl, 50226, Frechen (DE); Neustadt, Dieter, 50226, Frechen (DE)
(74) Vertreter: Selting, Günther

(57) **Zusammenfassung**

Die Nutstoßmaschine weist einen vertikal hin- und hergehend angetriebenen Stoßarm (21) auf, der an seinem unteren Ende ein Nutmesser (20) trägt, welches in ein Werkstück (14) eintaucht. Der Stoßarm (21) wird von einem ersten Exzenter (31) angetrieben, so dass er hin- und hergehende Vertikalbewegungen ausführt und dabei gleichzeitig um eine Querachse (35) geschwenkt wird. Die Querachse (35) wird in vertikaler Richtung verschoben, so dass das Hebelverhältnis des von dem Stoßarm (21) gebildeten zweiarmigen Hebels sich verändert. Dadurch wird von Hub zu Hub die Nuttiefe der zu erzeugenden Nut (16) vergrößert.

## Beschreibung

Die Erfindung betrifft ein Nutstoßverfahren, bei welchem ein ein Nutmesser tragender Stoßarm hin- und hergehende Längshübe ausführt, wobei von Längshub zu Längshub ein zunehmendes seitliches Ausstellen des Nutmessers erfolgt, sowie eine Nutstoßmaschine.

DE 199 18 762 A1 (Balzat) beschreibt ein Nutstoßverfahren, bei welchem ein Nutmesser in einer Bohrung eines Werkstücks in periodischen Hüben hin- und herbewegt wird und während des Hubes mit einer Schneide in die Wand der Bohrung eindringt. Das Nutmesser wird ausschließlich linear in Achsrichtung der Bohrung bewegt. Während eines Hubes des Nutmessers wird das Werkstück quer zur Achsrichtung der Bohrung bewegt.

Die bekannten Nutstoßmaschinen sind in der Schnelligkeit der Hübe des Stoßarms begrenzt. Sie erzeugen während des Betriebes Lärm und liefern bei schneller Betriebsart häufig keine gute Oberflächenqualität.

Der Erfindung liegt die Aufgabe zugrunde, ein Nutstoßverfahren und eine entsprechende Vorrichtung anzugeben, die einen ruhigen und vibrationsfreien Lauf des Stoßarmes ermöglichen und dadurch im Stande sind, hohe Oberflächenqualitäten zu erzeugen.

Das Nutstoßverfahren nach der vorliegenden Erfindung ist durch den Anspruch 1 bezeichnet. Hiernach führt der Stoßarm bei jedem Längshub eine Schwenkbewegung um eine Querachse aus und die Querachse wird in Richtung der Längshübe verschoben, so dass sich mit jedem Längshub das Maß des seitlichen Ausstellens des Nutmessers vergrößert.

Die Erfindung bietet den Vorteil einer ruhigen, vibrationsfreien Arbeitsweise mit der Folge der Erzeugung einer hohen Oberflächenqualität und eines geräuscharmen Betriebes. Infolge der erheblichen Reduzierungen der Vibrationen wird auch die Standzeit des Messers erhöht. Die Schnelligkeit bewirkt eine hohe Wirtschaftlichkeit des Verfahrens und der Maschine.

Zur Vergrößerung des seitlichen Ausstellens des Nutmessers zum Zwecke der Vertiefung der Nut wird die Querachse, um die der Stoßarm schwenkbar ist, relativ zum Stoßarm verschoben. Der Stoßarm bildet einen zweiarmigen Hebel, der an einem Ende pendelnd angetrieben ist. Durch Veränderung des Verhältnisses der Hebelarme des zweiarmigen Hebels wird das Maß des seitlichen Ausstellens des Nutmessers von Längshub zu Längshub verändert. Dadurch wird die Nuttiefe zunehmend erhöht.

Die Erfindung erlaubt eine Zerspanung von Nutformen mit einer bisher nicht dagewesenen Zerspanungsgeschwindigkeit von 120 bis 140 m/min. Ein besonderes Charakteristikum der Nutstoßmaschine besteht darin, dass diese mit äußerster Laufruhe läuft, wobei ihr Betrieb fast nicht mehr hörbar ist.

Die Erfindung erlaubt die Herstellung geschlossener Nuten, wobei es möglich ist, sowohl Bogenformen als auch Prismenformen und Hybridform-Nuten zu erzeugen. Bei besonderen Nutformen besteht die Möglichkeit, zusätzlich zu der Ausstellbewegung des Nutmessers noch den Werkstückträger gesteuert zu verschiben, um die Nutform zu beeinflussen.

Ein weiterer Vorteil der Erfindung besteht darin, dass der Stoßarm auslegerartige vorsteht und am unteren Ende keine Führung unterhalb des Werkstücks benötigt. Dadurch ist es möglich, Nuten auch in Sackbohrungen einzubringen. Schließlich ermöglicht die Bauform auch das Bearbeiten von Bohrungen, die eine große Länge haben, und das Anbringen von Nuten in den Wänden solcher Bohrungen.

Die Steuerung der Längshübe des Stoßarms erfolgt vorzugsweise durch einen ersten Exzenter, der auf das eine Ende des Stoßarms einwirkt und diesen periodisch antreibt. Als Steuerantrieb zur Steuerung der Nuttiefe kann ein zweiter Exzenter vorgesehen sein, dessen Umlaufdauer ein Mehrfaches derjenigen des ersten Exzenters beträgt.

Der Steuerantrieb ist vorzugsweise mit einem Hauptantrieb zum Bewegen des Stoßarmes durch ein Untersetzungsgetriebe gekoppelt, derart, dass die Querachse jeweils einen Hub in der Zeit ausführt, in der der Stoßarm eine Anzahl von Hüben ausführt. Der einzelne Hub des Steuerantriebes bestimmt die Fertigungsdauer einer Nut. Das Ende dieses Hubes kann mit einem Näherungsschalter festgestellt werden. Die Maschine wird dann auf die Herstellung der nächstfolgenden Nut eingestellt, wobei ein neuer Bearbeitungszyklus beginnt.

Im Folgenden wird unter Bezugnahme auf die Zeichnungen ein Ausführungsbeispiel der Erfindung näher erläutert.

Es zeigen:
- Fig. 1: eine Frontansicht der Nutstoßmaschine, teilweise geschnitten, und

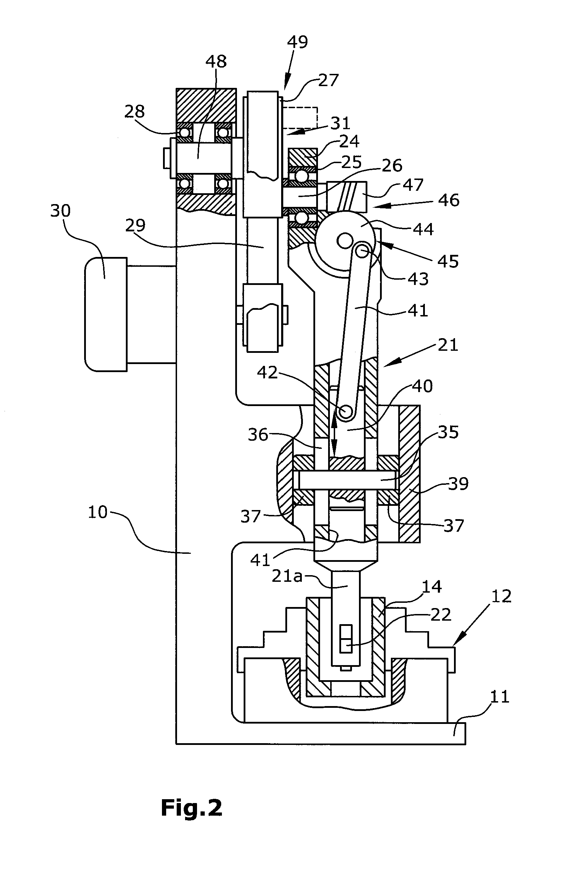

- Fig. 2: eine Seitenansicht aus Richtung des Pfeiles II von Fig. 1, teilweise geschnitten.

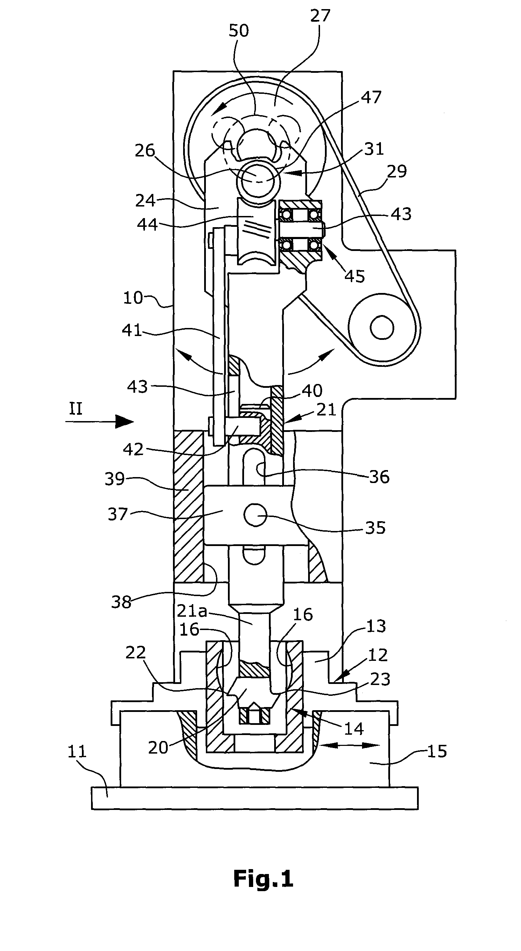

Die Nutstoßmaschine weist einen Ständer 10 auf, der das Maschinengestell bildet und die übrigen Komponenten trägt. Am unteren Ende des Ständers 10 befindet sich eine Basis 11, auf der ein Werkstückträger 12 befestigt ist. Der Werkstückträger 12 weist ein Spannfutter 13 zum Einspannen eines Werkstücks 14 auf. Der Werkstückträger 12 kann entlang des Doppelpfeiles 15 in Fig. 1 gesteuert horizontal verfahren werden. Das Werkstück 14 ist hier eine zylindrische Buchse, in deren Wand Nuten 16 im Innern erzeugt werden sollen. Ein derartiges Werkstück ist beispielsweise eine hydraulische Steuerbuchse in einer Servolenkung. Hierbei müssen die Nuten 16 mit hoher Präzision gefertigt werden, um einen exakten Steuervorgang zu ermöglichen und Betriebsgeräusche zu vermeiden. Die Herstellung der Nuten 16 erfolgt mit einem Nutmesser 20, das am unteren Ende eines vertikalen Stoßarms 21 angeordnet ist. Das Nutmesser 20 ist im vorliegenden Fall ein Doppelwerkzeug mit zwei nach entgegengesetzten Seiten abstehenden Schneiden 22, 23. Während des Abwärtshubes des Stoßarms 21 ist die Schneide 22 wirksam und während des Aufwärtshubes die Schneide 23. Beide Schneiden 22, 23 sind also entgegengesetzt gerichtet.

Das obere Ende des Stoßarms 21 wird von einem Tragkopf 24 gebildet, der mit einem Lager 25 auf einem Schaft 26 gelagert ist. Der Schaft 26 steht horizontal von einem Rad 27 ab, welches mit einem Lager 28 mit horizontaler Achse an dem oberen Ende des Ständers 10 gelagert ist. Das Rad 27 bildet eine Riemenscheibe, um die ein Antriebsriemen 29 umläuft. Dieser wird von einem Motor 30 angetrieben. Das Rad 27 mit dem exzentrisch davon abstehenden Schaft 26 bildet einen ersten Exzenter 31, der den Hauptantrieb zum Bewegen des Stoßarmes 21 darstellt. Durch den ersten Exzenter 31 wird der Stoßarm 21 periodisch vertikal bewegt, wobei er zugleich eine Pendelbewegung um eine horizontale Querachse 35 ausführt.

Die Querachse 35 geht quer durch ein in Längsrichtung des Stoßarmes verlaufendes Langloch 36 des Stoßarms hindurch. Zu beiden Seiten der Querachse 35 befindet sich ein Schieber 37. Die Schieber 37 laufen in einer ortsfesten Führung 38 eines mit dem Ständer 10 fest verbundenen Lagerstuhls 39. Sie bewirken eine Vertikalführung der Querachse 35.

Die Querachse 35 ist in einem Achsträger 40 gelagert. Der Achsträger 40 ist ein Schieber, der in einer Längsbohrung 51 des Stoßarms 21 verschiebbar ist. An dem oberen Ende des Achsträgers 40 greift ein Lenker 41 an, dessen unteres Ende an einem Gelenkzapfen 42 gelagert ist. Der Gelenkzapfen 42 steht von dem oberen Ende des Achsträgers 40 seitlich ab und er ragt durch ein Langloch 36 in der Wand des Stoßarms 21 hindurch. Das obere Ende des Lenkers 41 ist mit einer horizontalen Gelenkachse 43 verbunden, die seitlich von einem Schneckenrad 44 absteht. Der Gelenkzapfen 42 ist exzentrisch an dem Schneckenrad 44 befestigt, wodurch der zweite Exzenter 45 gebildet wird. Der zweite Exzenter 45 ist Bestandteil des Steuerantriebs 46 für die vertikale Verschiebung der Querachse 35. Zu diesem Steuerantrieb gehört eine Schnecke 47, die mit dem Schaft 26 verbunden ist, und mit dem Umfang des Schneckenrades 44 kämmt. Durch den Schaft 26, der um die Achse 48 des Rades 27 umläuft, ist der Steuerantrieb 46 mit dem Hauptantrieb 49 gekoppelt, so dass beide miteinander synchronisiert sind. Der Steuerantrieb 46 bildet ein Untersetzungsgetriebe, dass bewirkt, dass die Hubzyklen der Querachse 35 ein ganzzahliges Mehrfaches der Hubzyklen des Stoßarmes 21 betragen. Anstelle eines Schneckenantriebs kann für den Steuerantrieb 46 auch ein anderes Getriebe benutzt werden, beispielsweise ein Kegelradgetriebe.

Beim Betrieb der Nutstoßmaschine treibt der Motor 30 das Rad 27 an. Der Schaft 26 bewegt sich dabei auf der in Fig. 1 dargestellten Umlaufbahn 50. Diese Bewegung führt auch der Tragkopf 24 aus. Die Folge ist, dass der Stoßarm 21 sowohl eine vertikale Hin- und Herbewegung ausführt als auch eine Pendelbewegung um die Querachse 35 herum. Das untere Ende 21a des Stoßarmes 21 ist dünner als der darüber liegende Teil des Stoßarmes, der rohrförmig ausgebildet ist. An dem unteren Ende 21a befindet sich das Nutmesser 20 mit den beiden Schneiden 22, 23.

Der Motor 30 treibt das Rad 27, das über den ersten Exzenter 31 den Stoßarm 21 hin- und hergehend antreibt. Dabei führt der Stoßarm Schwenkbewegungen um die Querachse 35 durch, wobei der Stoßarm einen zweiarmigen Hebel bildet, dessen einer Hebelarm oberhalb der Querachse 35 und dessen anderer Hebelarm unterhalb der Querachse 35 angeordnet ist. Durch Verschieben der Querachse 35 durch den Steuerantrieb 46 wird das Hebelverhältnis des zweiarmigen Hebels kontinuierlich verändert.

Die Form der herzustellenden Nut 16 ergibt sich zunächst durch die Bewegung des ersten Exzenters 31, die von der Bewegung der Schneiden 22, 23 abgebildet wird. Dadurch entstehen Nuten 16 mit einer Rundform. Wenn eine andere Nutform hergestellt werden soll, wird der Werkstückhalter 12 in Richtung des Pfeiles 15 (Fig. 1) gesteuert bewegt.

Die Umlaufdauer des zweiten Exzenters 45 beträgt ein Vielfaches der Umlaufdauer des ersten Exzenters 31. Das Nutmesser 20 führt bei jedem Abwärtshub des Stoßarmes 21 mit der Schneide 22 gemäß Fig. 1 einen Abtragvorgang in der Nut 16 aus. Bei dem nachfolgenden Aufwärtshub taucht die gegenüberliegende Schneide 23 in die zugehörige Nut 16 ein und führt dabei eine Spanabhebung durch, wodurch die Nut vertieft wird. Bei dem nächstfolgenden Hub ist die Querachse 35 bereits weiter angehoben, so dass der untere Hebelarm länger und der obere Hebelarm kürzer geworden ist, wodurch bei dem nächsten Hub die Nuttiefe vergrößert wird, weil die seitliche Ausstellung der betreffenden Schneide 22, 23 größer geworden ist.

## Patentansprüche

1. Nutstoßverfahren, bei welchem ein ein Nutmesser (20) tragender Stoßarm (21) hin- und hergehende Längshübe ausführt, wobei von Längshub zu Längshub ein zunehmendes seitliches Ausstellen des Nutmessers (20) erfolgt,
**dadurch gekennzeichnet,**
**dass** der Stoßarm (21) bei jedem Längshub eine Schwenkbewegung um eine Querachse (35) ausführt und die Querachse (35) in Richtung der Längshübe verschoben wird, so dass sich mit jedem Längshub das Maß des seitlichen Ausstellens des Nutmessers (20) vergrößert.

2. Nutstoßverfahren nach Anspruch 1, **dadurch gekennzeichnet, dass** ein Ende des Stoßarms (21) auf einer Kreisbahn (50) geführt wird.

3. Nutstoßmaschine mit einem ein Nutmesser (20) tragenden Stoßarm (21), der zur Durchführung hin- und hergehender Längshübe angetrieben ist, und einem ein Werkstück (14) tragenden Werkstückträger (12), **dadurch gekennzeichnet, dass** der Stoßarm (21) um eine Querachse (35) schwenkbar gelagert ist, welche in Längsrichtung des Stoßarmes (21) bewegbar und durch einen Steuerantrieb (46) verstellbar ist.

4. Nutstoßmaschine nach Anspruch 3, **dadurch gekennzeichnet, dass** die Querachse (35) in einer ortsfesten Führung (38) geführt ist.

5. Nutstoßmaschine nach Anspruch 3 oder 4, **dadurch gekennzeichnet, dass** die Querachse (35) an einem Achsträger (40) angeordnet ist, der an dem Stoßarm (21) längs verschiebbar geführt ist.

6. Nutstoßmaschine nach einem der Ansprüche 2 bis 4, **dadurch gekennzeichnet, dass** die Längshübe von einem ersten Exzenter (31) erzeugt werden.

7. Nutstoßmaschine nach einem der Ansprüche 3 bis 6, **dadurch gekennzeichnet, dass** der Steuerantrieb (46) einen zweiten Exzenter (45) aufweist.

8. Nutstoßmaschine nach einem der Ansprüche 3 bis 7, **dadurch gekennzeichnet, dass** der Steuerantrieb (46) mit einem Hauptantrieb zum Bewegen des Stoßarmes (21) durch ein Untersetzungsgetriebe (47, 44) gekoppelt ist, derart, dass die Querachse (35) jeweils einen Hub in der Zeit ausführt, in der der Stoßarm (21) eine Anzahl von Hüben ausführt.

9. Nutstoßmaschine nach Anspruch 7, **dadurch gekennzeichnet, dass** der zweite Exzenter (45) mit dem Achsträger (40) über einen Lenker (41) verbunden ist.
